# EUROPÄISCHE PATENTSCHRIFT

(11) **EP 0 428 647 B1**
(45) Veröffentlichungstag und Bekanntmachung des Hinweises auf die Patenterteilung: **22.09.1993**
(21) Anmeldenummer: 90906849.6
(22) Anmeldetag: 29.05.1990
(51) Int. Cl.: F28C 1/14

(54) **KÜHLANLAGE DES HYBRIDEN TYPS**
HYBRID-TYPE COOLING PLANT
INSTALLATION REFRIGERANTE DE TYPE HYBRIDE

(30) Priorität: 30.05.1989 EP 89810400
(43) Veröffentlichungstag der Anmeldung: 29.05.1991
(73) Patentinhaber: Jäggi AG Bern, CH-3018 Bern (CH)
(72) Erfinder: MÜLLER, Walter, CH-8706 Feldmeilen (CH)
(74) Vertreter: Seehof, Michel
(86) Internationale Anmeldenummer: CH9000136
(87) Internationale Veröffentlichungsnummer: WO9015299

(56) Entgegenhaltungen:
- FR-A- 1 289 617
- FR-A- 2 362 358
- FR-A- 2 405 451
- GB-A- 1 559 329
- John H. Perry, Chemical Engineers Handbook, 1969, Mc. Graw Hill, Seiten 11-15 und 11-16

## Beschreibung

Die vorliegende Erfindung bezieht sich auf eine Kühlanlage des hybriden Typs gemäss Oberbegriff von Patentanspruch 1 und auf eine Verwendung einer solchen Anlage. Eine desartige Anlage ist aus der DE-A-22 51 709 bekannt. Bei der Anlage gemäss dieser Offenlegungsschrift ist der Wirkungsgrad gering und benötigt eine relativ lange Wegstrecke für die Wasserverteilung und die in dieser Offenlegungsschrift geforderte Wasserfilmbildung ist mit einer solchen Anordnung nicht gewährleistet, insbesondere auch durch die Verwendung der offenbarten Sprühköpfe.

Gemäss dem Chem. Engineers Handbook, 1969, Mc. Graw Hill, Seiten 11-15 und 11-16 ist es bekannt, den Wärmeaustausch durch einen Ventilator zu verstärken, doch gibt diese Literaturstelle keinerlei Hinweise darauf, einen Ventilator für eine eingangs erwähnte hybride Kühlanlage zu verwenden.

Die GB-A-1 559 329 beschreibt luftgekühlte Wärmetauscher aus Kunstharz des hybriden Typs für Wasserkühltürme, die ebenfalls einen Ventilator aufweisen, und bei welchen die Luftschlitze der Kühl-Lamellen geneigt sein können, während die eigentlichen Wärmetauscher senkrecht angeordnet sind, und die Benetzung durch oben angeordnete Sprühköpfe erfolgt. Die Beschränkung auf Kunstharz-Wärmetauscher und die einfache Besprühungseinrichtung engen den Anwendungskreis ein und ergeben keinen hohen Wirkungsgrad.

Es ist davon ausgehend Aufgabe der vorliegenden Erfindung, eine Kühlanlage des hybriden Typs anzugeben, die einen hohen Wirkungsgrad aufweist und energiesparend ist, eine kompakte und raumsparende Bauweise ermöglicht und bei der keine Schwadenbildung auftritt.

Diese Aufgabe wird mit der in dem Patentanspruch 1 definierten Kühlanlage gelöst.

Durch die in Anspruch 1 angegebene Neigung der Wärmetauscher und die Benetzungseinrichtung für jeden Wärmetauscher wird eine vollständige Benetzung aller Kühllamellen erreicht, wodurch vor allem ein hoher Wirkungsgrad erzielt wird.

Die Erfindung wird im folgenden anhand einer Zeichnung von Ausführungsbeispielen näher erläutert.
- Fig. 1: zeigt schematisch die erfindungsgemässe Kühlanlage mit den beiden Kühlkreisläufen,
- Fig. 2: zeigt ein Diagramm der verschiedenen Betriebsarten der Kühlanlage gemäss Fig. 1,
- Fig. 3: zeigt den lamellenartigen Aufbau einer Ausführungsvariante eines Wärmetauschers,
- Fig. 4: zeigt einen Schnitt von Fig. 3 in vergrössertem Massstab, und
- Fig. 5: zeigt eine Ausschnittsvergrösserung der Wasseraufgabeteile für die Benetzung.

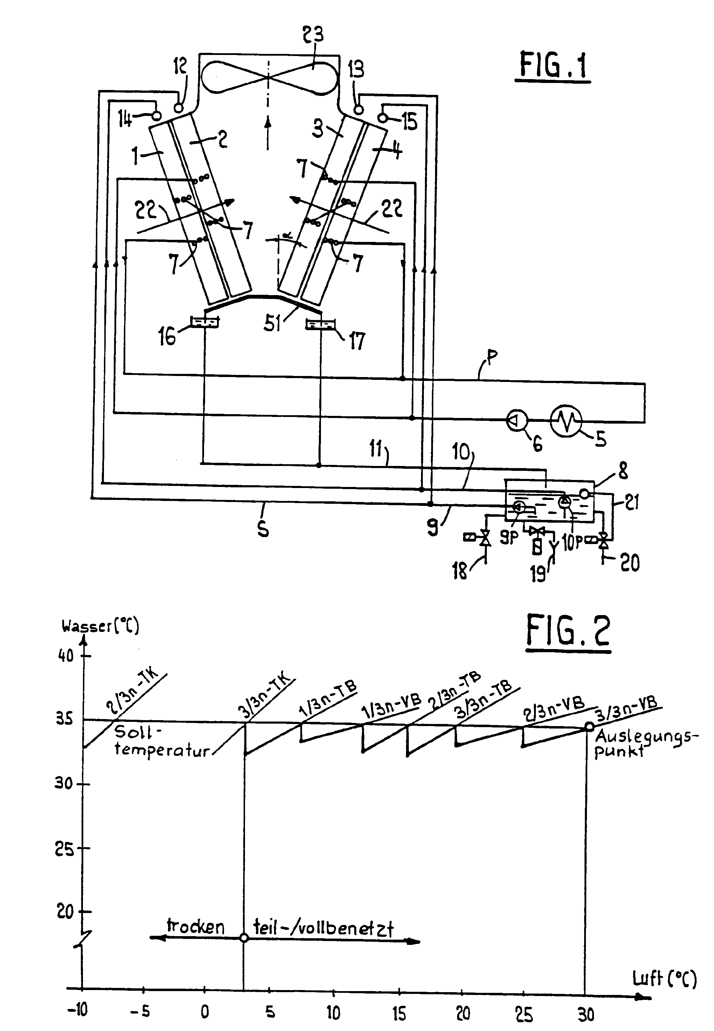

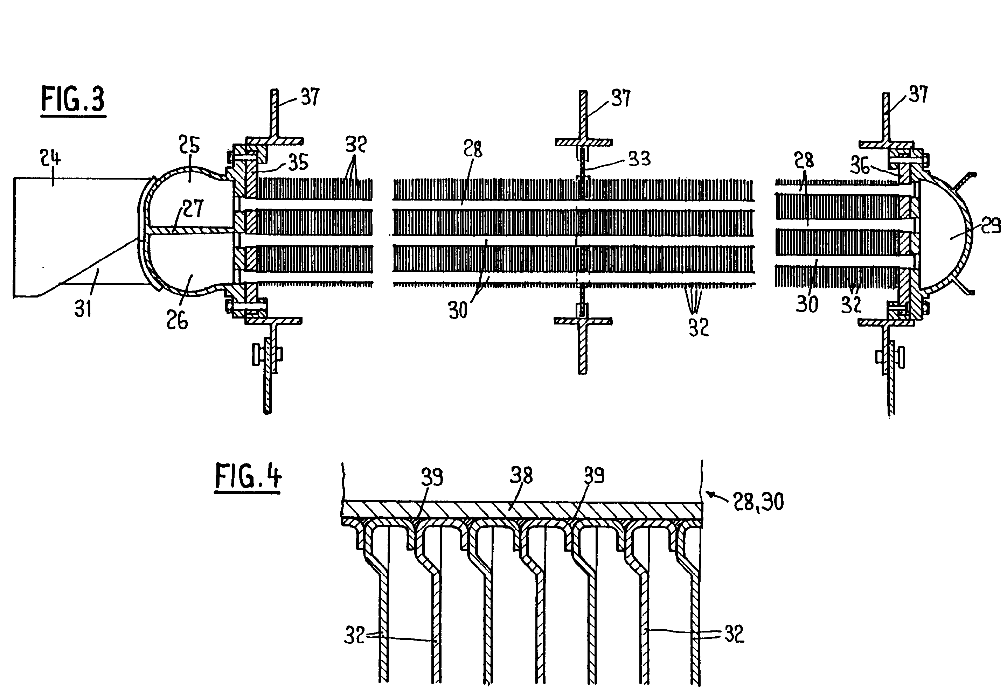

In Fig. 1 erkennt man vier Wärmetauscher 1,2,3 und 4, die paarweise, d.h. 1 und 2 sowie 3 und 4 als Doppelwärmetauscher schräg angeordnet sind, wobei sie von der Waagrechten um einen Winkel 90 - α abweichen und der Winkel α beispielsweise 20° beträgt, jedoch einen Wert von 0 bis 25° einnehmen kann. Die Wärmetauscher 1 bis 4 werden von einem primären Kühlkreislauf P durchflossen, wobei das zu kühlende Medium von der Wärmequelle 5 zur Pumpe 6 gelangt und der Vorlauf in die beiden inneren Wärmetauscher 2 und 3 und von dort in die äusseren Wärmetauscher 1 und 4 gelangt, wovon der Rücklauf wieder zur Wärmequelle geleitet wird. Die symbolisch angegebene Wärmequelle 5 beinhaltet einen beliebigen wärmeaustauschenden Apparat. Im Wärme-Kraftprozess kann es ein Oberflächen- oder ein Mischkondensator sein was hier jedoch nicht Gegenstand der Erfindung ist. In den Wärmetauschern sind schematisch die wasserführenden Rohre 7 im Lamellenpaket angedeutet, deren Einzelheiten anhand der Fig. 3 bis 5 erläutert werden wird.

Der sekundäre Kühlkreislauf S besteht im wesentlichen aus einem Vorratsbecken 8, an dem die beiden Vorläufe 9 und 10 mit ihren Pumpen 9P + 10 P sowie der Rücklauf 11 angeschlossen sind. Der eine Vorlauf 9 ist mit den beiden inneren Benetzungsanlagen 12 und 13 und der andere Vorlauf 10 ist mit den äusseren Benetzungsanlagen 14 und 15 verbunden, während der Rücklauf 11 das überschüssige Benetzungswasser erhält, das von den beiden Wassersammlungsbehälter 16 und 17 aufgefangen und dem Rücklauf zugeleitet wird. Das Vorratsbecken 8 hat mehrere Anschlüsse, um das Kühlwasser aufbereiten zu können. So weist das Becken einen Inhibierungsänschluss 18 auf, da zur Bekämpfung des Algen- und Schleimbakterienwachstums eine Inhibierung notwendig ist. Ferner ist das Becken mit einem Abschlämmanschluss 19 versehen, da der Rücklauf, bzw. das von den Lamellen herabrieselnde Benetzungswasser Rückstände aus ausgewaschenen Luftschadstoffen aufweist. Ausserdem sind am Becken ein Zusatzwasseranschluss 20 sowie eine automatische Niveauregulierung 21 angeschlossen. Um Korrosionsschäden an den Lamellen auszuschliessen, ist die Aufsalzung des Kühlwassers je nach Rohwasserqualität auf das Drei- bis Fünffache zu begrenzen, während in den meisten Fällen eine Teilenthärtung auf ca. 5° französische Härte genügt, damit Restablagerungen in etwa gleichen Reinigungszyklen wie bei der Trockenkühlung mit einem Hartwasserstrahl noch entfernt werden können. Zur Vergrösserung der durchfliessenden Luftmenge, die durch die beiden Pfeile 22 symbolisch dargestellt ist, wird ein Ventilator 23 zugeschaltet.

Aus Fig. 2 geht hervor, dass die Kühlanlage in verschiedenen Arten und Stufen betrieben werden kann, die einerseits von der Solltemperatur des Kühlmediums und andererseits von der Aussentemperatur, resp. Temperatur der Aussenluft abhängen. Zu diesem Zwecke können die verschiedenen Ventile, Umwälzpumpen sowie der Ventilator von einer hier nicht eingezeichneten elektrischen Schaltung mit den entsprechenden Bedienungselementen und Messfühlern gesteuert werden. So wird, in der Fig. 2 von links nach rechts gelesen, eine Solltemperatur des zu kühlenden Medium von beispielsweise 35°C - die nicht überschritten werden darf - vorausgesetzt und die Anlage in einem Bereich von unter -10° bis +3°C in reiner Trockenkühlung betrieben, wobei der Ventilator 23 mit zwei Dritteln seiner Nenndrehzahl n betrieben wird und die Nenndrehzahl bei Erreichen von -7,5°C auf drei Drittel erhöht wird. Zwischen 3° und 30°C der Aussenluft kann die Kühlanlage zuerst bei Teilbenetzung gefahren werden, d.h. dass zuerst nur je einer der Doppelwärmetauscher, z.B. 1 und 4 benetzt wird, während bei den inneren Wärmetauscher 2 und 3 die entsprechende Benetzungspumpe im sekundären Kühlkreislauf S ausgeschaltet ist.

Beim Erreichen der Solltemperatur, was bei ca. +7°C der Fall ist, kann dann wahlweise entweder zuerst auf Vollbenetzung mit gleichbleibender Ventilatordrehzahl oder unter Beibehaltung der Teilbenetzung auf 2/3 Ventilatordrehzahl hochgefahren werden, je nachdem, ob einem schwadenfreien Betrieb oder der Einsparung des Stromeigenbedarfs für die Ventilatoren der Vorzug eingeräumt werden soll.

Bei weiter steigenden Aussenlufttemperaturen ergeben sich die weiteren Schaltstufen ebenfalls aus den Zielsetzungen des Betreibers, entweder den Wasserverbrauch durch Teilbenetzung oder den Stromverbrauch durch Vollbenetzung zu minimalisieren.

Eine grösstmöglichste Angleichung an die Solltemperatur, d.h. eine höchstmögliche Stromeinsparung wird erreicht, wenn die Ventilatormotoren von einem Temperaturfühler im Primärkreislauf stufenlos in der Drehzahl requliert werden, was heute zum Stand der Technik gehört.

Fig. 2 zeigt auch die besonderen Merkmale des Kühlers bei Trockenbetrieb, bei Teil- und bei Vollbenetzung der Wärmeaustauscher. Ein für Trockenkühlung charakteristisches Merkmal ist der steilste Anstieg der Kühlwassertemperaturen mit zunehmender Lufttemperatur, während sich die Kurven bei Teilbenetzung etwas und bei Vollbenetzung stark abflachen. Dank dem flacheren Kurvenverlauf mit Teil- oder Vollbenetzung kann je nach Prozessführung auf einzelne Ventilatordrehzahlstufen verzichtet werden, was Rosteneinsparungen und eine einfachere Betriebsführung bewirkt.

Die wesentlichsten Vorteile der erfindungsgemässen Anlage ergeben sich zum ersten aus der Möglichkeit, im geschlossenen Kühlkreislauf Kühlwassertemperaturen zu erreichen, die bis etwa 5°C unter der Tockenlufttemperatur liegen können, was sonst nur mit einem reinen Verdunstungskühler im problembehafteten, offenen Kühlkreislauf möglich ist.

Zum zweiten erlaubt diese Anlage trotz Verdunstungskühlung mit Benetzungswasser im kritischen Lufttemperaturbereich von ca. 15°C und tiefer, einen Kühlbetrieb ohne sichtbare Dampfschwaden. Dies wird durch Teilbenetzung möglich, bei der sich die Umgebungsluft im benetzten Wärmetauscher 1 und 4 auf nur etwa 80% relative Feuchte anfeuchtet und im Wärmetauscher 2 und 3 ohne Wasserzufuhr erwärmt, wodurch sie auf etwa 40% relative Feuchte getrocknet wird und damit keine sichtbaren Dampfschwaden erzeugen kann (< 0°C → trocken → ohnehin keine Schwaden).

Falls die Schwadenbildung von untergeordneter Bedeutung ist, die Kühlanlage aber unter 0°C irgendwelche Leistungsspitzen abdecken sollte, so ergibt sich im Gefrierbereich der Umgebungsluft die Möglichkeit zu einer Teilbenetzung ohne Einfriergefahr des Benetzungswassers. In diesem Falle wird die Benetzung der Wärmetauscher 1 und 4 aus - und die Benetzung der Wärmetauscher 2 und 3 eingeschaltet. Die Umgebungsluft kann sich dann in den trockenen Wärmetauschern 1 und 4 über den Gefrierpunkt erwärmen und ist dann in der Lage, im Wärmetauscher 2 und 3 mehr Wasser zu verdampfen, was zu einer Verbesserung des Kühleffektes führt. Ausserdem werden eventuelle einzelne Tropfen aus den Wärmetauschern 2 und 3 von den Wärmetauschern 1 und 4 absorbiert und können nicht zu Eisbildung führen.

Je nach Auslegungstemperaturabstand von der Luft- zur Kaltwassertemperatur können die Doppelkühler 1 und 2 sowie 3 und 4 auch durch einfache Kühler, z.B. 1 und 4 ersetzt werden, wobei dann allerdings eine Teilbenetzung nicht mehr möglich ist.

Aus den schematischen Darstellungen der Fig. 1 und 2 ergeben sich einige weitere wesentliche Vorteile dieser Kühlanlage, nämlich eine kompakte Bauweise mit einem integrierten Benetzungssystem, woraus sich sowohl Einsparungen bezüglich Material als auch bezüglich Energie zur Einhaltung der Solltemperatur ergeben. Durch die Verwendung eines Ventilators ergibt sich ein grösserer Kühlluftmengendurchsatz, wodurch eine kleinere und kompaktere Bauweise ermöglicht wird, als bei Naturzugkühltürmen gleicher Leistung.

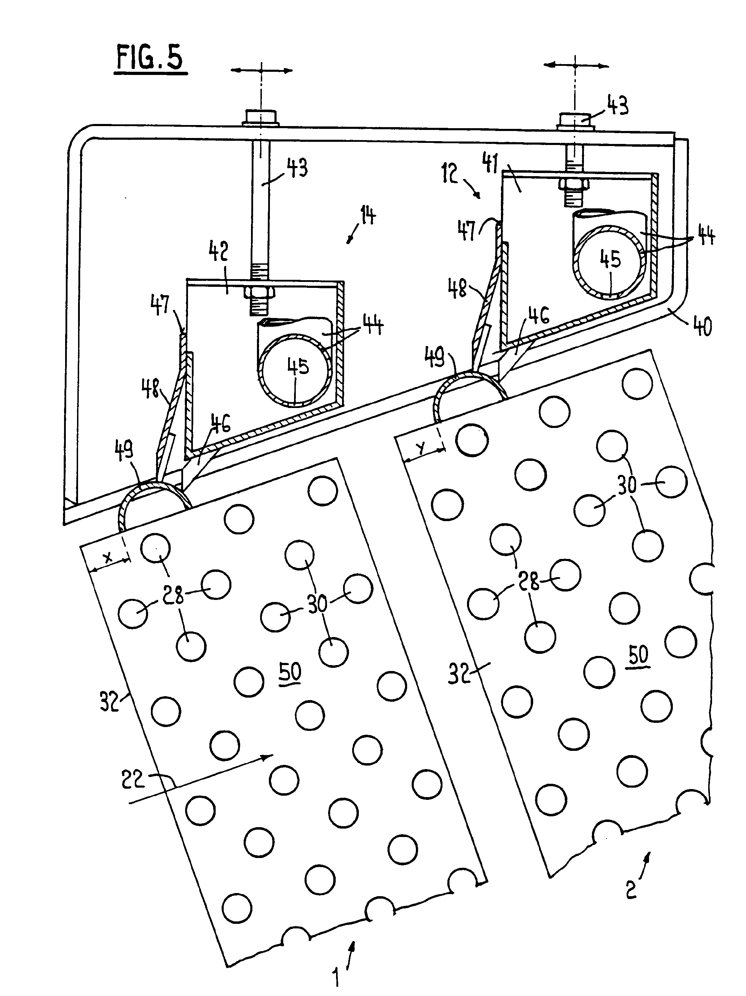

In der schematischen Fig. 1 ist dargestellt, dass der Vorlauf des Primärkühlkreislaufes zum Wärmetauscher 2 gelangt, diesen gänzlich durchfliesst und anschliessend durch den Wärmetauscher 1 gelangt und von dort in den Rücklauf. Gemäss Fig. 3, die einen Schnitt durch einen Wärmetauscher darstellt, ist es möglich, das Kühlwasser des primären Kühlkreislaufes so zu lenken, dass es den Wärmetauscher zweimal durchfliesst. Man erkennt in Fig. 3 das Kühlwasseranschlussstück 24, von welchem das Wasser in die in Fig. 3 obere Einlasskammer 25 fliesst, wobei diese Kammer 25 von der Rückflusskammer 26 durch eine Trennwand 27 getrennt ist. Von der Einlasskammer 25 gelangt das Wasser in die Rohre 28, die in dieser Hälfte angeordnet sind und von dort in die Umlenkkammer 29 und durch die zweite Hälfte von Rohren 30 in die Rückflusskammer 26, von wo das Wasser in den Auslass 31 gelangt. Die versetzt angeordneten Rohre sind in Lamellen 32 eingezogen, siehe auch Fig. 5, wobei die Lamellenpakete durch Versteifungsbleche 33 und durch eine in der Zeichnung links angeordneten Endplatte 35 fest und in der Endplatte 36 beweglich gehalten sind. Das Lamellenpaket ist an einer nur bruchstückhaft gezeichneten Halterung 37 befestigt.

Bei solchen Wärmetauschern spielt der Korrosionsschutz eine erhebliche Rolle, da die meisten Wärmetauscher aus Metall gefertigt sind. Es sind auch bereits Wärmetauscher bekannt, die Teile aus Kunststoff, die gegen Korrosion nicht anfällig sind, aufweisen. Doch weisen die einen viel geringeren Wirkungsgrad auf. Metallische Wärmetauscher sind auch für den Trockenbetrieb gegen Korrosion zu schützen, da das Zusammenwirken von atmosphärischen Staubablagerungen auf den Lamellen mit der Feuchtigkeit bei Taupunktunterschreitung als gefährliche Korrosionsursache bekannt ist. Bei der Benetzung der Wärmetauscher mit einer definierten Wasserqualität kann das bei Trockenkühlung vorherrschende Problem zwar entschärft, wenn auch nicht ganz beseitigt werden. Ausserdem kann die wesentlich gefährlichere Spaltkorrosion zwischen zwei aufeinanderliegenden Lamellen und der angrenzenden Rohrwand entstehen. Eine erste Massnahme besteht darin, dass sowohl für die Rohre als auch für die Lamellen Aluminium mit einem hohen Reinheitsgehalt verwendet wird, dessen natürliche Oxydhaut bereits gegen schwache Korrosionsangriffe schützt. Eine weitere wirksame Massnahme zum Schutz des wasserführenden Rohres ist die satte Auflage der Lamellen 32 auf den jeweiligen Bördeln der angrenzenden Lamellen, was allerdings die Gefahr einer Spaltkorrosion noch nicht ganz eliminiert. Die Spaltkorrosion wird durch ein vom Anmelder vorbekanntes und vorbenutztes Verfahren beseitigt, wobei mittels einem aushärtbaren Epoxyharz die Zwischenräume zwischen den Lamellen und der Rohrwand gefüllt werden. In bezug auf Fig. 4 erkennt man die Rohrwand 38, die Lamellen 32 und deren gebogenen Enden 34 sowie die Hohlraumfüllung durch ein aushärtbares Epoxyharz 39. Anschliessend wird das ganze Lamellenpaket mit den Rohren im Tauchbad durch eine elektrophoretische Lackabscheidung mit einer gut haftenden porenfreien Lackschicht überzogen. Dieses Korrosionsschutzverfahren ermöglicht die Benetzung und eine einfache Reinigung metallischer Wärmetauscher. Im Trockenbetrieb bewährte, verzinkte Stahlrippenrohre sind dagegen als Einzelrohre in einem sogenannten Rohrbündel für eine gleichartige Benetzung völlig ungeeignet. Rechnet man ausserdem mit einem vollständigen Zinkabtrag durch Benetzung innert 50 Jahren, was durchaus realistisch ist, so wäre die Zinkkonzentration im Abschlämmwasser höher als europäische Umweltschutzverordnungen dies zulassen. Bei der Verwendung von lackiertem Aluminium dagegen, gibt es keine umweltgefährdenden Nachteile.

Wie bereits vorgehend erwähnt, hängt der Wirkungsgrad der Kühlanlage im teil- oder vollbenetzten Bereich weitgehend davon ab, wie gut das Wasser auf den Kühllamellen verteilt wird. In Fig. 5 ist im Schnitt eine Wasseraufgabe dargestellt. Man erkennt zwei Wärmetauscher eines Paares, beispielsweise die Wärmetauscher 1 und 2 mit den Rohren 28 und 30, die in den Lamellen 32 eingelassen sind. Die beiden Benetzungseinrichtungen 12, 14 sind an beiden Enden des Kühlers oder mittig mittels geeigneter Bolzen 43 oder dergleichen in einer Konsole 40 befestigt, wobei die Bolzen 43 mit ihren anderen Enden in der Abdeckung der Aufgabekanäle 41, 42 befestigt sind. Das Wasser des sekundären Kühlkreislaufes erreicht den Aufgabekanal 41 und 42 durch das Aufgaberohr 44, in welchem Löcher 45 angeordnet sind, wobei die Löcher und der Abstand derselben derart dimensioniert sind, dass Wasser im Ueberschuss abgegeben werden kann. Am Boden des Aufgabekanals befindet sich ein Entleerungsrohr 46, dessen Oeffnung jedoch so klein ist, dass der Aufgabekanal stets bis zum Ueberlauf 47 gefüllt ist und ein grosser Teil des Wassers über diesen Ueberlauf und dem Leitblech 48 entlangfliessen kann. Vom Leitblech 48 gelangt das Wasser auf das halbkreisförmige Leitrohr 49, von wo es sich gleichmässig aufteilt und in 2 parallelen Wasserfilmen auf die Lamellen abfliessen kann. Zwischen dem Leitblech 48 und dem Leitrohr 49 ist selbstverständlich ein kleiner Abstand, damit das Wasser dort auf beiden Seiten abfliessen kann. Wie aus Fig. 5 hervorgeht, ist das Leitrohr 49 nicht in der Mitte des Lamellenpaketes angeordnet, sondern, in der Luftstromrichtung gesehen (siehe Pfeil 22) in der ersten Hälfte und das Leitblech 48 trifft nicht auf den Scheitel des Leitrohres 49, sondern in einen Abstand davon in Richtung des Luftstromes. Diese asymmetrische Anordnung sowohl des Leitrohres als auch des Leitbleches bezüglich des Leitrohres ergibt zusammen eine gleichmässige Verteilung des Wasserfilms auf den Lamellen, da immer ein Luftstrom vorhanden ist.

Je nach Luftbelastung der Kühler im Auslegungspunkt sind die Benetzungseinrichtungen 14 und 12 so einzubauen, dass sich von den jeweiligen Anströmkanten der Lamellen 32 bis zum ersten Film der Wasseraufgabe 49 unterschiedliche Abstände von x zu y ergeben. Die Versuche haben gezeigt, dass die Leistung der Kühler, vor allem bei hoher Luftbelastung wesentlich verbessert werden kann, wenn der Abstand y etwa 20-40 mm grösser ist als der Abstand x. Die Halterungen 43 der Benetzungseinrichtungen 14 und 12 müssen daher quer zur Kühlerlängsrichtung in Abhängigkeit der Luftbelastung im Auslegepunkt eingestellt werden können.

Die vollständige Benetzung der Lamellen hängt nicht nur von der Verteilung des Wassers auf den Lamellen ab, sondern ganz wesentlich von einer gleichmässigen Wasseraufgabe, die dann erreicht wird, wenn das Wasser aus den Kanälen 42, 41 über die ganze Linie der Ueberfallkanten 47 und als homogener Film auf den Blechen 48 zum halbkreisförmigen Leitrohr 49 gelangt.

Versuche haben ergeben, dass das Sandstrahlen der Oberfläche des Leitbleches 48 zwar eine Verbesserung der Verteilungseigenschaften des Wassers ergibt, jedoch noch bessere Resultate erzielt werden können, falls die Oberfläche des Bleches 48 durch Bearbeitung mittels Glasperlen von beispielsweise 3 mm Durchmesser behandelt wird und die Abströmkanten der Bleche etwa 15 - 20° angespitzt werden.

Gleiche Resultate, aber kostengünstiger in der Herstellung, ist die Verwendung von dessinierten, ca. 1 mm dikken Blechen als Leitblech 48 und mit längs zum Wasserfilm laufenden geprägten rillen von etwa 0,3 mm Tiefe und etwa 1 - 2 mm Breite, was das aufwendige Anspitzen der Bleche an der Abströmkante erübrigt.

Für ein optimales Arbeiten muss der Luftdurchsatz, der Winkel α und die Benetzungswassermenge derart aufeinander abgestimmt werden, dass infolge der Wasseraufgabe kein vorzeitiges Austropfen erfolgt, durch den Luftstrom kein Wasser ausgetragen wird, um eine Schwadenbildung zu verhindern, das Ueberschusswasser unter den Kühler durch das Tropfblech 51 (siehe Fig. 1) gesammelt und abgeleitet werden kann und das Benetzungswasser auf den Vorder- und Rückseiten der Lamellen einen dünnen pulsierenden Film bildet. Durch die Wasseraufgabe im Ueberschuss erfolgt auch eine stete Reinigung der Lamellen, wobei die Schmutzpartikel aus der Luft abgeschlämmt werden.

### Ausführungsbeispiel:

Das zu benetzende Lamellenpaket weist in der Luftstromrichtung eine Tiefe von 1-2 x 150 mm, eine Höhe von 1,2-2,4 m und eine Länge von 3,5-20 m auf. Die Luftbelastung auf die Anstromfläche der Wärmetauscher beträgt 2-7 t/h m², die Wasserbelastung 0,6-1,5 m³/h und m Kühlerlänge, Wasserverdunstung 0,05-0,1 m³/h und m Kühlerlänge je nach Luftzustand (°C/% r.F). Die Wasserbeladung im sekundären Kühlkreislauf beträgt 8-10 x Verdunstungsmenge.

## Patentansprüche

1. Kühlanlage des hybriden Typs, mit Oberflächenwärmetauschern (1-4), in denen das zu kühlende Medium einen geschlossenen, primären Kühlkreislauf (P) bildet und über denen eine Benetzungsanlage (12-15) sowie unter denen eine Wassersammlungseinrichtung (16,17) angeordnet sind, die mit einer Umwälzpumpeneinrichtung einen Sekundärkühlkreislauf (5) bilden, wobei der sekundäre Kühlkreislauf wahlweise für bestimmte Wärmetauscher einschaltbar und ausgelegt ist, die Benetzung mit Wasserüberschuss durchzuführen, dadurch gekennzeichnet, dass die rechteckigen Wärmetauscher (1-4) aus Rohre (28, 30) enthaltenden Kühllamellen (32) aufgebaut sind und gegenüber der Waagrechten mit einem Winkel von (90°- α) angeordnet sind, wobei für jeden Wärmetauscher (1-4) eine oberhalb dieser angebrachte Benetzungseinrichtung (12-15) angebracht ist, die einen Aufgabekanal (42) mit einem Ueberlauf (47) für das Wasser des sekundären Kühlkreislaufes (S) mit einem Leitblech (48) zum Ueberführen des Wassers und zum gleichmässigen Aufteilen des Wasserfilms in parallele Wasserfilme auf ein über den Lamellen angebrachtes Leitrohr (49) enthält, wobei das Leitrohr, in der Luftstromrichtung (22) gesehen, in der ersten Hälfte der Breite des Wärmetauschers angeordnet ist und das Leitblech (48), ebenfalls in der Luftstromrichtung gesehen, nach dem Scheitelpunkt des Leitrohres mündet und der Winkel α einen Wert von 0-25° einnimmt, und die Anlage einen Ventilator (23) enthält.

2. Kühlanlage nach Anspruch 1, dadurch gekennzeichnet, dass die Wärmetauscher paarweise (1,2;3,4) für Teilbenetzung geeignet oder als Einzelelemente (1;4) angeordnet sind und einen Winkel von 2α= 40° einschliessen.

3. Kühlanlage nach Anspruch 1 oder 2, dadurch gekennzeichnet, dass die Wärmetauscher (1-4) aus Lamellen (32) aufgebaut sind, die in vertikaler Richtung angeordnet sind und in denen die Rohre (28, 30) quer dazu verlaufen, die mit dem primären Kühlkreislauf (P) verbunden sind.

4. Kühlanlage nach einem der Ansprüche 1-3, dadurch gekennzeichnet, dass die Oberfläche des aus Aluminium bestehenden Leitbleches (48) strukturiert ist, indem sie entweder mittels Bearbeitung mit Glasperlen aufgerauht ist, wobei die Abströmkante des Leitbleches angespitzt ist, oder die Oberfläche parallel zum Wasserfluss geprägte Rillen aufweist.

5. Kühlanlage nach einem der Ansprüche 1 bis 4, dadurch gekennzeichnet, dass je zwei Benetzungseinrichtungen ( 12, 14; 13, 15) in einer Konsole (40) befestigt sind und in jedem Aufgabekanal (41, 42) ein Aufgaberohr (44) mit in einem Abstand voneinander angeordneten Löchern (45) und ein Entleerungsrohr (46) angeordnet ist.

6. Kühlanlage nach einem der Ansprüche 1 bis 5, dadurch gekennzeichnet, dass im Lamellenwärmetauscher (1-4) je drei Rohre (28, 30) in versetzten Lagen angeordnet sind, und der Wärmetauscher eine durch eine Trennwand (27) geteilte Einlasskammer (25) und Auslasskammer (26), die an das Kühlwassereinlassstück (24) bzw. an den Auslass (31) angeschlossen sind und an seiner anderen Seite eine Umlenkkammer (29) aufweist.

7. Kühlanlage nach einem der Ansprüche 1 bis 6, dadurch gekennzeichnet, dass sie eine elektrische Schaltung und Messfühler aufweist, um sie je nach Solltemperatur des zu kühlenden Mediums und Temperatur der Aussenluft ganz trocken oder teilbenetzt durch Benetzung einzelner Wärmetauscher oder vollbenetzt und den Ventilator mit voller Nenndrehzahl n oder Bruchteile davon zu betreiben.

8. Verwendung der Kühlanlage nach den Ansprüchen 1 bis 7 mit paarweise angeordneten Wärmetauschern (1, 2; 3, 4), dadurch gekennzeichnet, dass die Kühlanlage über 0°C Lufttemperatur durch alleinige Benetzung der beiden äusseren Wärmetauscher (1, 4) teilbenetzt wird, um über den ganzen kritischen Lufttemperaturbereich bis ca. 15°C keine sichtbaren Dampfschwaden zu erzeugen und unter 0°C Lufttemperatur eine Teilbenetzung mit höherer Wärmeleistung ohne Gefahr der Eisbildung durch die alleinige Benetzung der inneren Wärmetauscher (2, 3) durchgeführt wird.

## Claims

1. A cooling plant of the hybrid type, comprising surface heat exchangers (1-4) in which the medium to be cooled forms a closed primary circuit (P) and above which a wetting device (12-15) and below which a water collecting device (16,17) are arranged which form a secondary cooling circuit together with a circulating pump device, said secondary cooling circuit (S) being selectively operable for individual heat exchangers and being designed such as to effect an excess water wetting, characterised in that the rectangular heat exchangers (1-4) are composed of cooling fins (32) comprising tubes (28,30) and are arranged at an angle of (90°-α) with respect to the horizontal direction, a wetting device (12-15) for each heat exchanger (1-4) being provided above the latter, said wetting device comprising a feed channel (42) having an overflow (47) for the water of said secondary cooling circuit (S) with a guide plate (48) for conveying the water and for evenly dividing the water film into parallel water films onto a guide tube (49) mounted above said fins, said guide tube, seen in the direction of the air flow (22), being arranged in the first half of the width of said heat exchanger and the outlet of said guide plate (48), also seen in the direction of the air flow, being disposed after the crest of said guide tube, in that the angle α is comprised between 0 and 25°, and in that said plant comprises a fan (23).

2. Cooling plant according to claim 1, characterised in that said heat exchangers are suitable for partial wetting in pairs (1,2; 3,4) or are arranged as individual elements (1;4) and include an angle of 2α = 40°.

3. Cooling plant according to claim 1 or 2, characterised in that said heat exchangers (1-4) are composed of fins (32) which are arranged in the vertical direction and in which the tubes (28, 30) which are connected to said primary cooling circuit (P) extend transversally.

4. Cooling plant according to any one of claims 1 - 3, characterised in that the surface of said guide plate (48) of aluminum is structured, either by a roughening treatment by means of glass beads, the flow-off edge of the guide plate being tapered, or by providing the surface with grooves embossed in parallel to the water flow.

5. Cooling plant according to any one of claims 1 to 4, characterised in that two respective wetting devices (12,14; 13,15) are mounted in a console (40) each, and in that a feed tube (44) having holes (45) arranged at a mutual distance as well as a draining pipe (46) is disposed in each feed channel (41, 42).

6. Cooling plant according to any one of claims 1 to 5, characterised in that groups of three tubes (28, 30) are arranged in said finned heat exchanger (1 - 4) in staggered layers, and said heat exchanger is provided with an inlet chamber (25) and an outlet chamber (26) which are divided by a separating wall (27) and are connected to the cooling water inlet (24) and to the outlet (31), respectively, and with a reversing chamber (29) on the other side.

7. Cooling plant according to any one of claims 1 to 6, characterised in that it is provided with an electric circuit and with measuring sensors in order to operate it fully dry or partially wetted, by wetting individual heat exchangers, or fully wetted, and to operate said fan at full nominal speed n or at fractions thereof, according to the desired temperature of the medium to be cooled and the ambient air temperature.

8. Use of the cooling plant according to claims 1 to 7 having heat exchangers arranged in pairs (1,2; 3,4), characterised in that said cooling plant is partially wetted by exclusive wetting of the two outer heat exchangers (1, 4) at air temperatures above 0°C in order not to produce any visible plumes in the entire critical air temperature range up to about 15°C, and in that a partial wetting with higher thermal output without any danger of ice formation by exclusive wetting of the inner heat exchangers (2, 3) is effected at air temperatures below 0°C.

## Revendications

1. Installation de refroidissement du type hybride, comprenant des échangeurs de chaleur (1-4) dans lesquels le fluide à refroidir forme un circuit primaire (P) fermé, et au-dessus desquels est disposé un dispositif de mouillage (12-15) et en-dessous desquels est disposé un dispositif collecteur d'eau (16,17) qui forment un circuit de refroidissment secondaire avec une pompe de circulation, ledit circuit de refroidissement secondaire étant enclenchable sélectivement pour des échangeurs de chaleur individuels et étant prévu pour effectuer le mouillage par excès d'eau, caractérisé en ce que les échangeurs de chaleur (1-4) sont constitués de lamelles de refroidissement (32) comprenant des tubes (28,30) et sont disposés à un angle de (90°-α) par rapport à l'horizontale, un dispositif de mouillage (12-15) pour chaque échangeur de chaleur (1-4) étant monté au-dessus de ces derniers, ledit dispositif de mouillage comprenant un canal d'alimentation (42) avec un déversoir (47) pour l'eau du circuit de refroidissement secondaire (S) et une tôle de guidage (48) pour le transfert de l'eau et pour la division égale du film d'eau en films d'eau parallèles sur un tube de guidage (49) disposé sur lesdites lamelles, ledit tube de guidage, vu dans la direction du flux d'air (22), étant disposé dans la première moitié de la largeur de l'échangeur de chaleur, et ladite tôle de guidage, également vue dans la direction du flux d'air, débouchant après le point de partage du tube de guidage, en ce que l'angle α est compris entre 0 et 25°, et que ladite installation comporte un ventilateur (23).

2. Installation de refroidissement selon la revendication 1, caractérisée en ce que les échangeurs de chaleur sont appropriés pour le mouillage partiel par paires (1,2; 3,4) ou sont disposés en tant qu'éléments individuels (1;4) et renferment un angle de 2α = 40°.

3. Installation de refroidissement selon la revendication 1 ou 2, caractérisée en ce que les échangeurs de chaleur (1-4) sont constitués de lamelles (32) qui sont disposées en direction verticale et dans lesquelles les tubes (28, 30) raccordés au circuit réfrigérant primaire (P) s'étendent en direction transversale.

4. Installation de refroidissement selon l'une quelconque des revendications 1 - 3, caractérisée en ce que la surface de la tôle de guidage (48) en aluminium est structurée, soit en étant rendue rugueuse par un traitement par perles de verre, l'arête effluente étant effilée, ou en ce que la surface comporte des rainures imprimées parallèlement au flux d'eau.

5. Installation de refroidissement selon l'une quelconque des revendications 1 à 4, caractérisée en ce que deux dispositifs de mouillage (12,14; 13,15) sont chaque fois montées dans une console (40), et que chaque canal d'alimentation (41, 42) présente un tube d'alimentation (44) avec des trous (45) arrangés à une distance mutuelle, et un tube d'évacuation (46).

6. Installation selon l'une quelconque des revendications 1 à 5, caractérisée en ce que des groupes de trois tubes (28, 30) sont disposés dans chaque échangeur de chaleur à lamelles (1-4) en couches décalées, et que l'échangeur de chaleur présente une chambre d'entrée (25) et une chambre de sortie (26) divisées par une paroi de séparation (27) et raccordées l'une à la boîte d'entrée d'eau réfrigérante (24) et l'autre à la sortie (31), et de l'autre côté, une chambre de retour (29).

7. Installation de refroidissement selon l'une quelconque des revendications 1 à 6, caractérisée en ce qu'elle comporte un circuit électrique et des détecteurs de mesure afin de l'opérer, selon la température désirée du fluide à refroidir et la température de l'air ambiant, entièrement à sec ou partiellement à humide par mouillage d'échangeurs de chaleur individuels, ou entièrement à humide, et d'opérer le ventilateur à pleine vitesse nominale n ou à des fractions de cette dernière.

8. Utilisation de l'installation de refroidissement selon les revendications 1 à 7 avec des échangeurs de chaleur (1,2; 3,4) disposés par paires, caractérisée en ce que l'installation de refroidissement est partiellement mouillée par mouillage exclusif des deux échangeurs de chaleur extérieurs (1, 4) au-dessus de 0°C afin de ne pas produire des buées visibles dans la plage de températures critique jusqu'à environ 15°C, et qu'un mouillage partiel à rendement thermique supérieur sans danger de formation de glace par mouillage exclusif des échangeurs de chaleur intérieurs (2,3) est effectué en-dessous de 0°C.
